# EUROPÄISCHE PATENTSCHRIFT

(11) **EP 0 460 537 B1**
(45) Veröffentlichungstag und Bekanntmachung des Hinweises auf die Patenterteilung: **29.12.1993**
(21) Anmeldenummer: 91108875.5
(22) Anmeldetag: 30.05.1991
(51) Int. Cl.: A01D 51/00

(54) **Vorrichtung zum Zusammentragen von Laub**
Apparatus for gathering foliage
Appareil pour ramasser le feuillage

(30) Priorität: 08.06.1990 DE 4018380
(43) Veröffentlichungstag der Anmeldung: 11.12.1991
(73) Patentinhaber: WIMA MASCHINEN- UND GERÄTEBAU GMBH, D-76646 Bruchsal (DE)
(72) Erfinder: Wiedenmann, Georg, W-7901 Rammingen Kreis Ulm (DE)
(74) Vertreter: Lichti, Heiner, Dipl.-Ing.

(56) Entgegenhaltungen:
- FR-A- 2 405 614
- US-A- 3 539 271
- US-A- 3 693 331
- US-A- 4 078 365

## Beschreibung

Die Erfindung betrifft eine Vorrichtung zum Zusammentragen von Laub mit einem fahrbaren Geräteträger und einem mit etwa senkrechter Drehachse darauf angeordneten Gebläse mit einem Gehäuse mit axialem Ansaugstutzen und tangentialem, bodennah angeordnetem Blasstutzen. Eine derartige Vorrichtung ist aus der FR-A-2 405 614 bekannt.

Vorrichtungen der vorgenannten Art, die auch als Laubblasgeräte bezeichnet werden, werden zum Zusammentragen oder Schwaden von Laub auf Flächen unterschiedlicher Art, zum Beispiel auf Verkehrsflächen, in Garten- und Parkanlagen oder dergleichen eingesetzt. Das in Schwaden zusammengetragene Laub kann dann leicht aufgenommen und abgefahren werden. Solche Laubblasgeräte werden in verschiedenen Ausführungen angeboten, zum Beispiel als Anbaugeräte für Fahrzeuge, Schlepper, Kleinschlepper, Selbstfahrer oder dergleichen, oder auch als einfache handgeschobene Geräte. Soweit sie als Anbaugeräte eingesetzt werden, wird das Gebläse in der Regel von dem den Geräteträger aufnehmenden Fahrzeug, zum Beispiel über eine Welle, Gelenkwelle oder dergleichen und ein Getriebe angetrieben. Ebenso sind Ausführungen bekannt, die einen Eigenantrieb aufweisen.

Die bekannte Ausführungsform hat den Nachteil, daß das Zusammentragen des Laubs fahrtrichtungsabhängig ist, da die Blasrichtung stets unter einem gleichen Winkel zur Fahrtrichtung steht. Dies hat zur Folge, daß der Fahrer bei entsprechenden Gegebenheiten die Fahrtrichtung häufig ändern muß, um das Laub an geeignetem Ort abzulegen. Weiterhin ist von Nachteil, daß ein sauberes Zusammentragen kaum möglich ist, wenn in Blasrichtung des Gebläses Hindernisse vorhanden sind, wie Gebäudewände, Sträucher oder dergleichen, oder wenn sich in Blasrichtung Gegenstände, Einrichtungen oder dergleichen befinden, auf denen sich Laub nicht ablagern darf oder soll. In solchen Fällen ist vom Fahrer ein besonderes Geschick gefordert oder aber lassen sich solche Flächen unter ungünstigen Bedingungen auf diese Weise nicht von Laub befreien. Gewisse Erleichterungen können zwar durch Leiteinrichtungen am Blasstutzen geschaffen werden, doch müssen diese entweder von Hand verstellt oder gar eingebaut werden, was die Arbeit unnötig erschwert und zeitaufwendig macht.

Aus der US-A-36 93 331 ist ein Laubsauggerät bekannt, bei dem das Laub mittels eines Gebläses vom Erdboden angesaugt und über einen tangentialen Blasstutzen zur Seite des Trägerfahrzeugs abgegeben wird. Das Gebläse weist eine im wesentlichen senkrechte Rotorachse auf und besitzt einen axialen Ausgangsstutzen sowie einen tangentialen Blasstutzen. Ein wirksames Zusammenblasen von Laub oder ähnlichem ist mit dem Laubsauggerät nicht zu erzielen.

Die US-A-35 39 271 zeigt ein Laubblasgerät mit einem Axialgebläse, das eine im wesentlichen horizontale Rotorachse aufweist. Das Axialgebläse ist um eine horizontale Achse derart an dem Aufbau des Fahrzeugs gelagert, daß es aufwärts und abwärts geschwenkt werden kann. Darüber hinaus ist es um eine vertikale Mittelachse des Fahrzeugs drehbar.

Der Erfindung liegt die Aufgabe zugrunde, eine Vorrichtung des eingangs genannten Aufbaus so auszubilden, daß ein einwandfreies und wirksames Zusammentragen von Laub unabhängig von den örtlichen Gegebenheiten möglich ist.

Diese Aufgabe wird erfindungsgemäß durch die kennzeichnenden Merkmale des Anspruchs 1 gelöst.

Die erfindungsgemäße Ausbildung der Vorrichtung gestattet es, unabhängig von der Fahrtrichtung des Geräteträgers, die Blasrichtung sowohl hinsichtlich des Ortes der Ablage des Laubs, als auch hinsichtlich der örtlichen Gegebenheiten optimal auszurichten, indem das horizontal liegende Gebläse mit seinem Gehäuse um die senkrechte Achse geschwenkt wird, so daß der Blasstutzen gleichfalls in einer horizontalen Ebene in die gewünschte Richtung bewegt werden kann. Damit ist es insbesondere möglich, die Blasrichtung so einzustellen und gegebenenfalls während der Fahrt zu variieren, daß beispielsweise das Laub von einer größeren Fläche auf einem Haufen und nicht in einem gradlinigen Schwaden zusammengetragen wird. Ferner ist es durch Änderung der Blasrichtung möglich, Hindernisse oder solche Orte, an denen das Laub nicht abgelegt werden soll, zu "umfahren", ohne daß eine Änderung der Fahrtrichtung notwendig ist. Ferner kann das Laub auch problemlos entlang von Hindernissen, wie Gebäudewänden, vor dem Geräteträger hergetrieben werden. Schließlich läßt sich auch allein durch Schwenken des Gebläsegehäuses der vom Luftstrom auf das Laub wirksame Druck aufgrund der fächerartigen Ausbreitung des Blasstrahls mit über der Breite sich änderndem Druck variieren. Der Schwenkwinkel sollte wenigstens 180° betragen, kann gegebenenfalls aber auch größer sein, so daß das Laub nicht nur nach vorne und zur Seite hin, sondern in gewissem Umfang auch entgegen der Fahrtrichtung geblasen werden kann. Schließlich ergibt sich der Vorteil einer flachen Bauweise, so daß man mit diesem Gerät auch bodennahe Hindernisse, wie Bäume, Sträucher oder dergleichen unterfahren und auch die darunter befindlichen Flächen von Laub befreien kann. Auch ergibt sich eine günstige, tiefe Schwerpunktlage. Die Schwenkung des Gebläses erfordert keinen weiteren Platzbedarf.

Um aufgrund der Schwenkbarkeit des Gebläses eine gleich gute stabile und schwingungsfreie Aufnahme des Gebläses zu gewährleisten, ist vorzugsweise vorgesehen, daß das Gehäuse des Gebläses auf einem Drehkranz am Geräteträger gelagert ist.

Zum Einstellen bzw. Variieren der Blasrichtung ist vorteilhafterweise vorgesehen, daß das Gebläse mittels einer am Geräteträger abgestützten und am Gehäuse angreifenden Stelleinrichtung schwenkbar ist.

Gemäß einem Ausführungsbeispiel kann die Stelleinrichtung einen Winkelhebel aufweisen, der an einer zur Achse für die Schwenkung des Gebläses versetzten senkrechten Achse gelagert ist und an dessen einem Arm eine Betätigungseinrichtung angreift und dessen anderer Arm mit dem Gehäuse des Gebläses verbunden ist. Der Winkelhebel und dessen Lagerung sorgen dafür, daß die Stellkraft problemlos aufgebracht und auf das Gehäuse des Gebläses übertragen werden kann.

Die Betätigungseinrichtung kann ein Stellmotor, z.B. einen Hydraulikzylinder, oder auch ein von Hand zu bedienendes Gestänge sein.

Eine weiterhin vorteilhafte Ausgestaltung zeichnet sich dadurch aus, daß die den Ansaugstutzen des Gebläses aufweisende Wand des Gehäuses oben angeordnet ist. Auf diese Weise ist ein ungehindertes und vor allem schmutzfreies Ansaugen der Luft möglich.

Schließlich kann, wie an sich bekannt, dem Blasstutzen des Gebläses eine verstellbare Leiteinrichtung zugeordnet sein, mittels der der Luftstrahl mehr oder weniger in Richtung zum Boden geneigt werden kann.

Nachstehend ist die Erfindung anhand eines in der Zeichnung wiedergegebenen Ausführungsbeispiels beschrieben. In der Zeichnung zeigen:
- Fig. 1: einen schematischen Schnitt einer Ausführungsform der erfindungsgemäßen Vorrichtung und
- Fig. 2: eine Draufsicht auf die Vorrichtung nach Figur 1.

In dem gezeigten Ausführungsbeispiel weist die Vorrichtung einen Geräteträger 8 in Form eines Frontanbaugerätes für einen Schlepper mit Zapfwellenantrieb auf. Am Geräteträger 8 sind Aufnahmen 9 zur Befestigung an einem Schlepper und drei Stützräder 10 angeordnet. (Schlepper und Zapfwelle sind nicht dargestellt). Auf dem Geräteträger sitzt ein Gebläse mit einem Gehäuse 1 und einem Laufrad 2. Das Gehäuse 1 weist auf seiner Oberseite eine axiale trichterförmige Ansaugöffnung 3 und einen etwa tangential angesetzten Blasstutzen 4 auf. Der Blasstutzen 4 weist eine verstellbare Leiteinrichtung 5 auf, mit der der Blasluftstrom in verschiedenen Winkeln bezüglich der Horizontalen ausgerichtet werden kann (gestrichelt dargestellt). Das Gehäuse 1 ist in der Drehachse 6 des Laufrades 2 auf einem Drehkranz 7 am Geräteträger 8 gelagert. Das Laufrad 2 des Gebläses ist mit einem am Anbaurahmen 8 befestigten Winkelgetriebe 11 gekuppelt, das seinerseits Anschlüsse 12 für die Zapfwelle eines Schleppers, Selbstfahrers oder dergleichen aufweist.

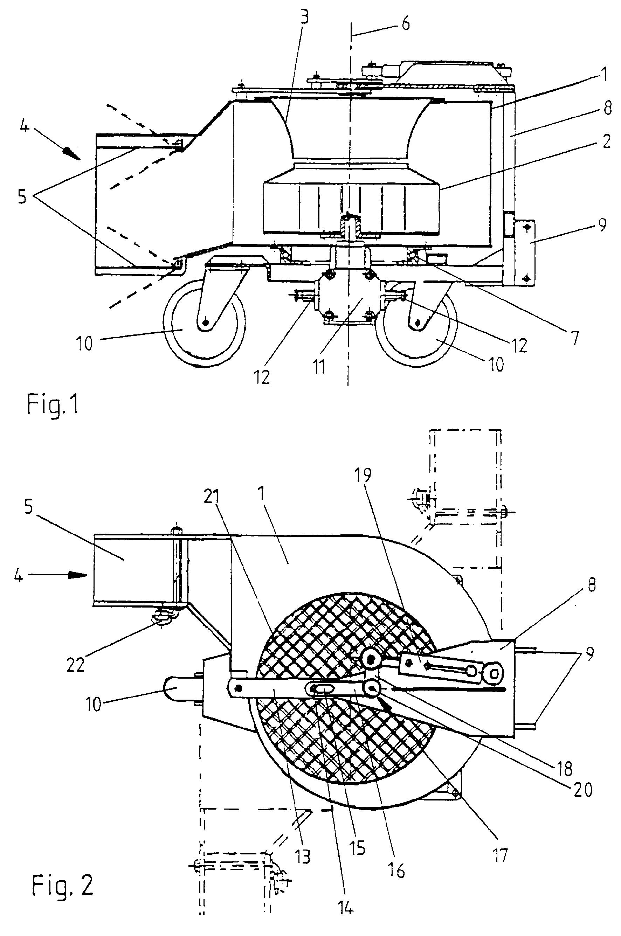

Statt der in Figur 1 gezeigten Anbau-Ausführung kann der Geräteträger auch als selbstfahrendes Gerät oder als von Hand zu schiebendes Gerät ausgebildet sein. Im letztgenannten Fall weist das Gebläse dann einen Eigenantrieb auf.

Aufgrund der schwenkbaren Lagerung des Gehäuses 1 kann der Blasstutzen 4 aus der in Figur 2 gezeigten Ausrichtung in Fahrtrichtung um etwa 90° nach beiden Seiten in die strichpunktiert wiedergebenen Positionen geschwenkt werden. Zu diesem Zweck ist eine Stelleinrichtung 17 vorgesehen, die einen bei 20 gelagerten Winkelhebel 17, 18 aufweist. Das Lager 20 ist gegenüber der Drehachse 6 des Gebläses versetzt. Der Winkelhebel greift mit seinem Arm 16 am Gehäuse 1 des Gebläses an. Zu diesem Zweck ist im äußeren Bereich des Gehäuses 1 eine Leiste 13 befestigt, die sich etwa radial über die Ansaugöffnung 3 erstreckt und einen nach oben ragenden Zapfen 14 aufweist, der in ein Langloch 15 am längeren Arm 16 des Winkelhebels eingreift. An dem dazu senkrechten kürzeren Arm 18 des Winkelhebels greift beim gezeigten Ausführungsbeispiel die Kolbenstange eines Hydraulikzylinders 19 an, der am Geräteträger 8 abgestützt ist und beispielsweise von der fahrzeugeigenen Hydraulik versorgt wird. Durch Beaufschlagen des Hydraulikzylinders 19 kann das Gehäuse 1 des Gebläses stufenlos über den gesamten Verstellbereich von ca. 180° geschwenkt werden. Aufgrund der Ausbildung des Winkelhebels mit seinen unterschiedlich langen Armen 17, 18 und der Anordnung seines Lagers 20 bezüglich der Drehachse 6 des Gebläse-Laufrades ergibt sich eine Getriebeübersetzung mit der Folge, daß der Schwenkbereich des Winkelhebels nennenswert kleiner sein kann als der Schwenkwinkel des Gehäuses 1, so daß innerhalb des Schwenkbereichs kein Totpunkt zu überwinden ist.

Die Luftleiteinrichtung 5 am Blasstutzen 4 besteht beim wiedergebenen Ausführungsbeispiel aus zwei Leitblechen, die an einer horizontalen Achse am Blasstutzen schwenkbar gelagert sind. Sie können mittels einer Handhabe 22 in ihrer Winkellage eingestellt werden. Gegebenenfalls kann die Handhabe 22 auch über ein Gestänge von dem Benutzer fernbedient werden.

## Patentansprüche

1. Vorrichtung zum Zusammentragen von Laub mit einem fahrbaren Geräteträger (8) und einem mit etwa senkrechter Drehachse (6) darauf angeordneten Gebläse mit einem Gehäuse (1) mit axialem Ansaugstutzen und tangentialem, bodennah angeordnetem Blasstutzen, dadurch gekennzeichnet, daß das Gebläse mit seinem Gehäuse (1) um eine senkrechte Achse schwenkbar ist und daß die Schwenkachse des Gehäuses (1) zum Verlagern des Gebläses etwa mit der Drehachse (6) des Laufrades (2) des Gebläses zusammenfällt.

2. Vorrichtung nach Anspruch 1, dadurch gekennzeichnet, daß das Gehäuse (1) des Gebläses auf einem Drehkranz (7) am Geräteträger (8) gelagert ist.

3. Vorrichtung nach Anspruche 1 oder 2, dadurch gekennzeichnet, daß das Gebläse mittels einer am Geräteträger (8) abgestützten und am Gehäuse (1) angreifenden Stelleinrichtung (17) verlagerbar ist.

4. Vorrichtung nach einem der Ansprüche 1 bis 3, dadurch gekennzeichnet, daß die Stelleinrichtung (17) einen Winkelhebel (16, 18) aufweist, der an einer zur Drehachse (6) für die Verlagerung des Gebläses versetzten senkrechten Achse (20) gelagert ist und an dessen einem Arm (18) eine Betätigungseinrichtung (19) angreift und dessen anderer Arm (16) mit dem Gehäuse (1) des Gebläses im Verbindung steht.

5. Vorrichtung nach einem der Ansprüche 1 bis 4, dadurch gekennzeichnet, daß die Betätigungseinrichtung ein Stellmotor (19) ist.

6. Vorrichtung nach einem der Ansprüche 1 bis 5, dadurch gekennzeichnet, daß die Betätigungseinrichtung ein von Hand zu bedienendes Gestänge ist.

7. Vorrichtung nach einem der Ansprüche 1 bis 6, dadurch gekennzeichnet, daß die den Ansaugstutzen (3) des Gebläses aufweisende Wand des Gehäuses (1) oben angeordnet ist.

8. Vorrichtung nach einem der Ansprüche 1 bis 7, dadurch gekennzeichnet, daß dem Blasstutzen (4) des Gebläses eine verstellbare Luftleiteinrichtung (5) zugeordnet ist.

## Claims

1. Apparatus for gathering up foliage with a mobile equipment carrier (8) and a fan located thereon with an approximately perpendicular rotation axis (6) and having a casing with an axial suction pipe connection and a tangential blowing pipe connection positioned close to the ground, characterized in that the fan with its casing (1) is pivotable about a perpendicular axis and that the pivot axis of the casing (1) for the displacement of the fan roughly coincides with the rotation axis (6) of the fan impeller (2).

2. Apparatus according to claim 1, characterized in that the fan casing (1) is mounted on a turntable (7) on the equipment carrier (8).

3. Apparatus according to claims 1 or 2, characterized in that the fan is displaceable by means of an adjusting device (7) acting on the casing (1) and supported on the equipment carrier (8).

4. Apparatus according to one of the claims 1 to 3, characterized in that the adjusting device (17) has a bent lever (16,18), which is mounted on a perpendicular spindle (20) displaced with respect to the rotation axis (6) for the movement of the fan and on whose one arm (8) acts an actuating device (19) and whose other arm (16) is connected to the fan casing (1).

5. Apparatus according to one of the claims 1 to 4, characterized in that the actuating device is a servomotor (19).

6. Apparatus according to one of the claims 1 to 5, characterized in that the actuating device is a manually operable linkage.

7. Apparatus according to one of the claims 1 to 6, characterized in that the wall of the casing (1) having the suction connection pipe (3) of the fan is located at the top.

8. Apparatus according to one of the claims 1 to 7, characterized in that an adjustable air conducting device (5) is associated with the fan blowing pipe connection (4).

## Revendications

1. Appareil pour ramasser le feuillage comportant un châssis porteur roulant (8) supportant une soufflerie et son carénage (1) à axe d'entraînement (6) à peu près vertical présentant un support d'aspiration dirigé axialement et un support de soufflage tangentiel (4) disposé près du sol, caractérisé en ce que l'ensemble de la soufflerie avec son carénage (1) est monté pivotant autour d'un axe vertical et en ce que l'axe de pivotement du carénage (1) utilisé pour mettre en position la soufflerie coïncide approximativement avec l'axe d'entraînement (6) de la turbine (2) de la soufflerie.

2. Appareil selon la revendication 1, caractérisé en ce que le carénage (1) de la soufflerie est monté sur le châssis (8) par l'intermédiaire d'une couronne d'entraînement (7).

3. Appareil selon les revendications 1 ou 2, caractérisé en ce que la soufflerie est montée déplaçable au moyen d'un dispositif de positionnement (17) qui s'appuie sur le châssis (8) et enserre le carénage (1).

4. Appareil selon les revendications 1 à 3, caractérisé en ce que le dispositif de positionnement (17) comporte un levier coudé (16,18) qui est monté sur un axe vertical (20) voisin de l'axe d'entraînement (6) pour le déplacement du carénage, levier coudé sur un bras (18) duquel vient en prise un dispositif d'actionnement (19) et dont l'autre bras (16) est en liaison avec le carénage (1) de la soufflerie.

5. Appareil selon l'une des revendications 1 à 4, caractérisé en ce que le dispositif d'actionnement est un servomoteur (19).

6. Appareil selon l'une des revendications 1 à 5, caractérisé en ce que le dispositif d'actionnement est une tige à actionnement manuel.

7. Appareil selon l'une des revendications 1 à 6, caractérisé en ce que la paroi du carénage (1) présentant le support d'aspiration (3) de la soufflerie est disposée en haut.

8. Appareil selon l'une des revendications 1 à 7, caractérisé en ce que sur le support de soufflage (4) est monté un dispositif réglable de guidage de l'air (5).
